# DEMANDE DE BREVET EUROPEEN

(11) **EP 2 982 522 A2**
(43) Date de publication de la demande: **10.02.2016**
(21) Numéro de dépôt: 15002136.8
(22) Date de dépôt: 17.07.2015
(51) Int. Cl.: B60C 15/024, B60C 15/02

(54) **PNEUMATIQUE POUR ROUE DE VÉLO**

(30) Priorité: 18.07.2014 FR 1401634
(71) Demandeur: MAVIC S.A.S., 74370 Metz-Tessy (FR)
(72) Inventeur: Mercat, Jean-Pierre, 74650 Chavanod (FR)
(74) Mandataire: Rambaud, Pascal

(57) **Abrégé**

Pneumatique (2) pour cycle comportant une enveloppe (21) qui a deux bords latéraux et qui définit un volume intérieur ayant sensiblement la forme d'un tore ouvert, dont l'ouverture est délimitée par les deux bords latéraux, ledit pneumatique comportant également un talon placé à proximité de chaque bord latéral, l'un au moins des deux talons (6) présentant un épaulement (65) faisant saillie vers l'extérieur ou vers l'intérieur, depuis la portion de l'enveloppe qui lui est adjacente. Ledit épaulement (65) comporte à sa surface extérieure une première surface d'appui (653) et un rebord (654), ladite première surface d'appui étant placée entre ledit rebord et ladite enveloppe et ladite surface d'appui étant placée en retrait par rapport audit rebord. Le module du talon ou le module équivalent des différents composants qui constituent ledit talon est compris entre 50 MPa et 2000 M Pa

## Description

La présente invention concerne une roue de cycle; notamment la présente invention concerne un pneumatique d'un genre nouveau pour une roue de cycle. La présente invention concerne également une jante prévue pour recevoir un pneumatique d'un genre nouveau.

Depuis le début du 20^{ième} siècle, on utilise les roues de cycle qui sont équipées de pneumatiques gonflés à l'air. Il existe actuellement deux familles de pneumatiques pour vélos : les pneumatiques tubulaires, appelés couramment "boyaux" et les pneumatiques à tringle, appelés "pneu" dans la langue courante. Ces deux grandes familles présentent chacune ses avantages et ses inconvénients.

Le document FR 778 744 décrit un boyau. Il comprend un anneau de tissus, qui peut être enduit de caoutchouc dont les deux bords sont cousus l'un avec l'autre pour constituer un tore. Avant la couture, une chambre à air est insérée à l'intérieur du tore. Une bande de roulement est ensuite collée à l'extérieur du tore. Le boyau est fixé à la jante par collage. Cette fixation est relativement bonne car la surface de collage est très importante. Cependant, l'échauffement du au freinage peut dans certains cas faire fondre la colle et engendrer des accidents.

Lorsqu'on monte un boyau sur une jante, celui-ci opère un léger frettage de la jante. Pour une roue à rayons tendus, le frettage a pour effet une perte d'environ 1 daN de la tension des rayons. Après gonflage à 8 bars du boyau, le frettage augmente légèrement et la perte de tension totale est d'environ 8 daN. Cette perte de tension est négligeable par rapport à la tension des rayons d'une roue qui peut atteindre 100 daN pour une roue de compétition cycliste. En fait, dans une roue équipée d'un boyau, la sollicitation exercée par le pneumatique et l'action de la pression de l'air sur la jante sont relativement faibles et quasiment négligeables. De plus cette sollicitation ne comporte pas de composante axiale.

Une roue équipée d'un boyau présente un énorme avantage, la légèreté. En effet, le boyau en lui-même est léger car sa forme torique lui permet avantageusement de résister à de forte pression de gonflage même avec une structure souple et légère. On peut évaluer la souplesse (rigidité) d'un boyau en mesurant l'augmentation du diamètre lorsqu'on le soumet à une force donnée. De manière connue, cette rigidité radiale peut être mesurée en faisant reposer le boyau sur deux demi-cylindres et en enregistrant la loi qui régit l'effort nécessaire pour écarter radialement les deux demi-cylindres en fonction du déplacement imposé par l'écartement des deux demi-cylindres, cet enregistrement est idéalement fait en écartant puis en rapprochant les demi-cylindres et moyennés pour annuler l'effet des frottements, la rigidité est ensuite déterminée en calculant la pente moyenne de l'effort en fonction du déplacement. En règle générale, dans ce cadre, la rigidité radiale d'un boyau non gonflé est d'environ 1 daN/mm alors que le même boyau gonflé à 8 bars est d'environ 6 daN/mm.

De plus, comme la jante qui reçoit le boyau, n'est que peu sollicitée par ce dernier, elle peut bénéficier d'une construction relativement plus légère. Cette grande légèreté du boyau en fait le choix exclusif de tous les cyclistes professionnels. Pourtant le boyau présente de nombreux inconvénients comme la complexité du collage/décollage sur la jante, la difficulté de réparation, son encombrement et son poids lorsque l'on doit emmener un boyau de secours pour pouvoir réparer, son coût nettement plus élevé que le pneu et les risques d'endommagement du boyau en cas de roulage à plat. Tous ces inconvénients ont pratiquement fait disparaître l'utilisation des boyaux pour les pratiques amateur et loisir du cyclisme.

L'autre grande famille de pneumatique, les pneumatiques à tringles répondent à un certain nombre des inconvénients des boyaux. Notamment ils facilitent le démontage/remontage sur la jante. Le pneu à tringles n'est pas un tore fermé, comme le boyau, mais un tore ouvert, la partie supérieure de la jante (le pont supérieur et les ailes latérales) en assurant la fermeture. Les pneus à tringles, sont largement utilisés pour tous types de véhicules terrestres: vélo, moto, auto.

Pour pouvoir fonctionner correctement, deux tringles non extensibles sont nécessaires. Ces tringles de par leur cerclage circonférentiel reprennent ainsi la quasi-totalité de la composante d'effort radial exercé par la pression de l'air sur la carcasse du pneumatique, ainsi lorsqu'un pneu est gonflé à 8 bars, la tension de chacune des tringles atteint environ 200 daN, ces tringles doivent ainsi être très résistantes pour ne pas se rompre sous la tension et la fatigue répétée du roulage, mais doivent aussi être très rigides pour ne pas trop se dilater sous l'action de la pression de l'air et ne pas risquer de déjanter en se dilatant et en passant alors par-dessus les bords externes de la jante. Ces tringles qui peuvent être en acier ou en matière composite sont lourdes. La paire de tringles d'un pneu de vélo de route peut peser entre 40 g et 100 g en fonction du matériau et de la section. A titre de comparaison avec celle d'un boyau, la rigidité d'un pneu comportant ses deux tringles est d'environ 80 daN/mm et elle peut atteindre 240 daN/mm pour les pneus tubeless, soit 13 à 40 fois plus qu'un boyau gonflé.

Les matériaux couramment utilisés pour les tringles sont par exemple l'acier, le carbone ou le kevlar dont les modules sont respectivement, 200 000 MPa, 100 000-250 000 MPa et 50 000 MPa. Le talon du pneumatique étant constitué par une tringle noyée dans du caoutchouc (module compris entre 1 et 15 MPa), il faut tenir compte des modules de ses différents constituants pour déterminer un module longitudinal équivalent du talon. Pour pouvoir résister à la pression de gonflage et éviter le déjantage, le module équivalent du talon d'un pneumatique à tringle est supérieur à 50 000 MPa, voire à 80 000 MPa.

Dans le domaine du cycle, les premiers pneus à tringle se montaient sur les jantes à ailes droites, puis sont apparues les jantes à crochets. Le document FR 2 351 803 décrit une jante à crochet pour le montage avec des pneus à tringle. Structurellement, une jante pour pneu à tringle se doit d'être beaucoup plus résistante qu'une jante de même taille pour boyau et par conséquent beaucoup plus lourde. En effet, lorsqu'un pneu est gonflé à une pression de 8 bars, il sollicite radialement la jante dans une telle mesure qu'on peut observer une perte d'environ 30 daN de tension des rayons. Cette sollicitation radiale centripète est sensiblement proportionnelle à la largeur interne de la jante, à son diamètre et à la pression, en isolant mécaniquement le système pneu + jante on démontre que l'action radiale centripète de la pression de l'air sur la jante correspond sensiblement à l'opposé de l'action radiale centrifuge de la carcasse sur les tringles. Les ailes de la jante doivent également résister aux sollicitations axiales qu'exercent sur elles les talons du pneu et qui les poussent à s'ouvrir.

Enfin, comme les tringles sont inextensibles et qu'il faut, pour pouvoir monter et démonter le pneu, pouvoir faire passer celles-ci par-dessus les crochets, il est nécessaire qu'une gorge relativement profonde soit présente pour recevoir la portion de tringle diamétralement opposée à celle que l'on fait passer par-dessus le crochet. Pour ne pas être trop sensible à la flexion, les parois de cette gorge profonde devront être plutôt épaisses et donc lourdes.

De façon générale dans une roue à rayons tendus équipée de pneus à tringles, la tension des rayons est dépendante de la pression de gonflage; plus la pression de gonflage augmente, plus la sollicitation du pneu sur la jante augmente et plus la tension diminue. Les roues à pneu doivent donc être surtendues à la fabrication afin d'obtenir la tension requise lorsque le pneu se trouve gonflé.

Sur les roues arrières de cycles, les nappes de rayons sont asymétriques et l'on observe que lorsque l'on fait varier la pression d'une telle roue équipée d'un pneumatique, la détente des deux nappes de rayons asymétriques provoque un léger décentrage de la jante, il convient donc aussi d'anticiper au mieux ce phénomène en compensant par un déport initial opposé lors de la fabrication de la roue.

Lors d'une crevaison avec une roue à pneu, la perte de pression est généralement très rapide car la jonction entre la jante et le pneu n'est pas prévue pour être étanche, cette perte de pression subite peut-être très dangereuse particulièrement en montagne lors de descente de cols. De plus, lorsque la pression du pneu est devenue nulle, if est très fréquent que le pneu déjante, ce qui provoque souvent une totale perte de contrôle du cycle contrairement au boyau qui reste collé à la jante.

Outre la facilité de montage, les pneumatiques à tringles permettent également, dans certaines conditions, un montage "tubeless". Le document FR 2 829 969 décrit une roue "tubeless". Cette dernière solution présente l'avantage de limiter le nombre de crevaisons en supprimant presque totalement celles dues aux pincements, mais également d'en atténuer les effets car le dégonflage se produit plus lentement. Cependant, le poids total de la roue est encore plus important avec une roue sans chambre à air qu'avec une roue avec chambre. En effet, d'une part les tringles doivent être beaucoup plus rigides et donc plus lourdes et d'autre part la jante doit être plus résistante et avoir un profil compatible avec l'étanchéisation primaire lors du gonflage. On peut noter dans ce document que les gorges qui reçoivent les talons du pneu sont très profondes, allant jusqu'à représenter la moitié de la hauteur de jante.

Le handicap de poids dont souffrent les roues et pneus à tringles, en général, et les roues tubeless, en particulier, ont pour conséquence qu'aucun cycliste professionnel sur route ou sur piste n'utilise des pneus à tringle et que, même, dans le cyclotourisme sur route, on utilise que très rarement des pneus sans chambre. En fait, l'utilisation des pneus sans chambre se cantonne pour l'instant au domaine du vélo tout terrain, domaine dans lequel le poids de l'équipement est moins critique que dans le domaine du cyclisme sur route.

L'objectif de l'invention est de remédier aux inconvénients de l'art antérieur.

L'objectif de l'invention est notamment de réaliser une roue pour cycle, pour la pratique du vélo de route comme pour celle du VTT qui soit aussi légère qu'une roue à boyau, et qui soit aussi pratique qu'une roue à pneumatique ouvert. L'invention vise à proposer une roue de cycle légère à l'utilisation simplifiée.

L'objectif de l'invention est atteint par la fourniture d'un pneumatique pour cycle comportant une enveloppe qui a deux bords latéraux et qui définit un volume intérieur ayant sensiblement la forme d'un tore ouvert, dont l'ouverture est délimitée par les deux bords latéraux, ledit pneumatique comportant également un talon placé à proximité de chaque bord latéral, l'un au moins des deux talons présentant un épaulement faisant saillie depuis la portion de l'enveloppe qui lui est adjacente, lequel épaulement comporte à sa surface extérieure une première surface d'appui et un rebord, ladite première surface d'appui étant placée entre ledit rebord et ladite enveloppe et ladite surface d'appui étant placée en retrait par rapport audit rebord, le module du talon ou le module équivalent des différents composants qui constituent ledit talon étant compris entre 50 MPa et 2000 MPa.

De préférence, le pneumatique selon l'invention présente toute combinaison techniquement acceptable des caractéristiques suivantes:
- l'épaulement fait saillie d'un côté vers le haut et vers l'extérieur, respectivement vers l'intérieur, par rapport au volume intérieur du pneumatique et le talon ne comporte pas de portion saillante de l'autre côté, c'est-à-dire vers le bas et vers l'intérieur, respectivement vers l'extérieur,
- dans un plan radial, la direction normale à la première surface d'appui est sensiblement tangente à l'enveloppe,
- dans un plan radial, la première surface d'appui a un profil en arc de cercle,
- dans un plan radial, la première surface d'appui a un profil droit,
- ledit épaulement fait saillie vers l'extérieur par rapport au volume intérieur,
- ledit épaulement fait saillie vers l'intérieur par rapport au volume intérieur,
- la profondeur du retrait de la première surface d'appui par rapport au rebord 654 de l'épaulement supérieure à 0,2mm,
- le talon est une pièce indépendante de l'enveloppe qui est solidarisée à cette dernière par couture, collage ou soudure,
- que le talon comporte une chape servant à le fixer sur l'enveloppe et en ce que ladite chape présente dans un plan radial, une hauteur comprise entre 4 et 15 mm, de préférence comprise entre 6 et 13 mm,
- la section du talon est inférieure à 16 mm²,
- le talon est réalisé en utilisant deux matériau distincts.

L'objectif de l'invention est également atteint par la fourniture d'une roue pour cycle comportant une jante et un pneumatique tel que décrit ci-dessus.

L'invention sera mieux comprise à la lecture de la description et du dessin annexé dans lequel:
- La figure 1 représente une vue d'une roue selon un premier mode de réalisation de l'invention.
- La figure 2 représente une vue en coupe selon un plan radial d'une roue équipée d'un pneu selon un premier mode de réalisation de l'invention.
- La figure 3 représente une vue de détail de la figure 2 représentant une partie du pneu.
- La figure 4 représente une vue en coupe selon un deuxième mode de réalisation de l'invention.
- Les figures 5a, 5b, 5c représentent en coupe la séquence de montage du pneumatique selon l'invention sur une jante.
- La figure 6 représente en coupe la configuration de la roue lorsque le pneumatique est à plat.
- La figure 7 représente en vue en coupe un pneu selon un troisième mode de réalisation de l'invention.

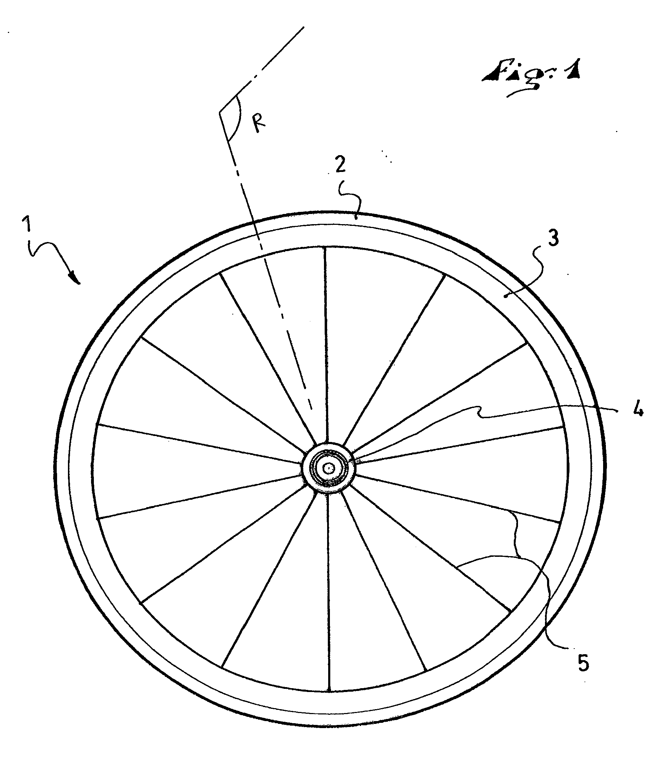

La figure 1 décrit une roue 1 selon l'invention. Cette roue comprend un pneumatique 2 et une jante 3 conforme à l'invention ainsi qu'un moyeu 4 et des rayons 5. Le cadre de l'invention ne se limite pas aux roues équipées de rayons tendus car des roues à bâtons ou lenticulaires conformes à l'invention sont également envisageables. Il s'agit d'une roue pour cycle. A la différence notamment des roues pour l'automobile, les roues pour cycles, se caractérisent par une plus grande légèreté et par une pression de gonflage du pneumatique pouvant être beaucoup plus importante. En effet, la masse d'une roue de cycle dépasse rarement quelques kilogrammes (entre 1 et 4 kg) quand une roue pour automobile ne descend jamais en dessous de 10-15 kg. L'invention s'applique particulièrement au domaine des roues de vélos pour la compétition ou le cyclotourisme, et notamment pour la compétition sur route. En effet, dans ce cadre, le poids d'une roue complète est inférieur à 2 kg et à 1 kg pour les plus performantes, tandis que les pressions de gonflage atteignent 10 bars alors qu'elles sont inférieures à 3 bars dans le domaine automobile et motocycle.

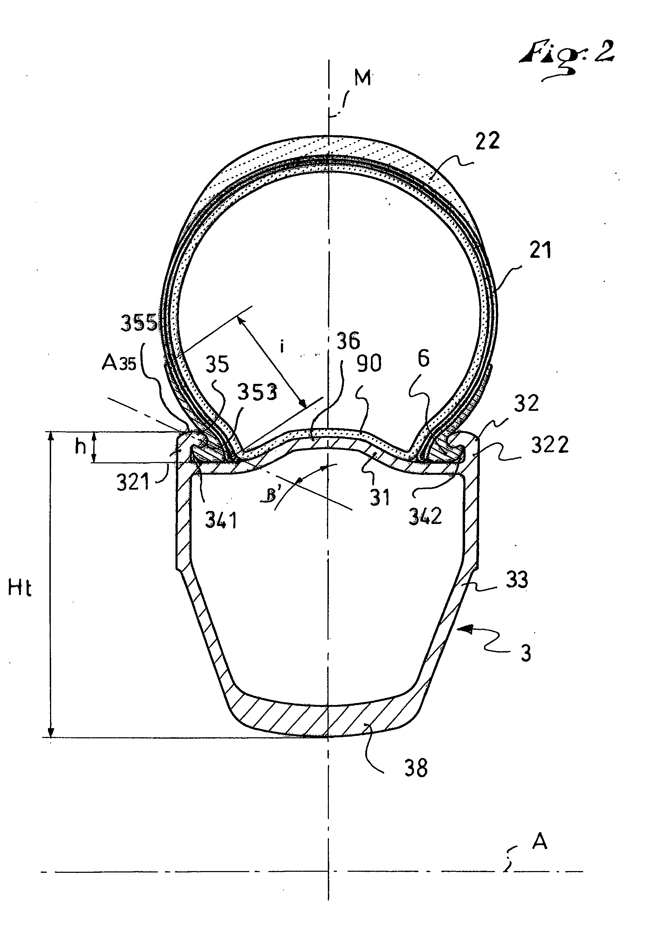

La figure 2 montre une section dans un plan radial (R) d'une roue équipée d'un pneu selon un premier mode de réalisation de l'invention. La jante 3 est constituée de manière connue par un tore fermé d'axe (A), l'axe de la roue. Ce tore est symétrique par rapport à un plan médian (M). Il est délimité par un pont inférieur 38, un pont supérieur 31, deux parois latérales 33. Au-dessus de ce tore est ménagée la zone d'interface avec le pneumatique. Cette zone d'interface comprend deux ailes latérales 32 qui prolongent les parois latérales et un pavé central 36. Le pavé 36 est constitué par la portion centrale du pont supérieur qui fait saillie vers le haut par rapport aux portions latérales du pont supérieur. On notera que dans toute la description qui suit, les notions d'orientation que sont "vers le haut" et "vers le bas" font référence à la section de la roue représentée à la figure 2. Par conséquent, "vers le haut" indique une direction radiale qui s'éloigne de l'axe (A) de la roue, tandis que "vers le bas" indique une direction radiale qui s'en rapproche. De la même manière, l'orientation "vers l'intérieur" correspond à une direction axiale qui se rapproche du plan médian (M) de la roue, alors que "vers l'extérieur" correspond à une direction axiale qui s'éloigne du plan médian (M).

Une gouttière gauche 341 est ainsi définie entre le pavé 36 et l'aile latérale gauche 321. De manière symétrique une gouttière droite 342 est définie entre le pavé 36 et l'aile latérale droite 322.

La gouttière gauche 341 constitue un volume torique semi-fermé délimité par la face interne de l'aile gauche 321, le dessus de la portion latérale gauche du pont supérieur 31 et le pavé 36. L'aile gauche 321 se prolonge par un crochet 35 qui est orienté vers le bas et vers l'intérieur. Dans le mode de réalisation représenté ici, l'aile gauche 321 qui s'étend vers le haut depuis la jonction entre la paroi latérale gauche 331 et le pont supérieur 31 réalise un coude vers le bas pour réaliser le crochet 35. Le crochet se termine par une face frontale qui constitue une première surface de butée 353. Cette première surface de butée 353 est une surface qui est une portion de tore dont l'intersection avec un plan radial est un arc de cercle. On définit, l'axe (A₃₅) comme la bissectrice de l'arc de cercle que constitue la première surface de butée 353. Cette bissectrice fait avec la verticale un angle β' (beta') compris entre 10° et 80°, de préférence entre 25° et 65°.

La jante se caractérise par une faible profondeur. En effet, la profondeur (h), qui correspond à la différence d'élévation entre le fond des gouttières et le sommet 355 des ailes latérales 32, est inférieure à 30% de la hauteur totale de la jante (Ht), de préférence à 25%. En valeur absolue, la profondeur (h) de la jante est inférieure à 6 mm, de préférence inférieure à 4,5 mm et on peut descendre, au moins, jusqu'à 2,25 mm

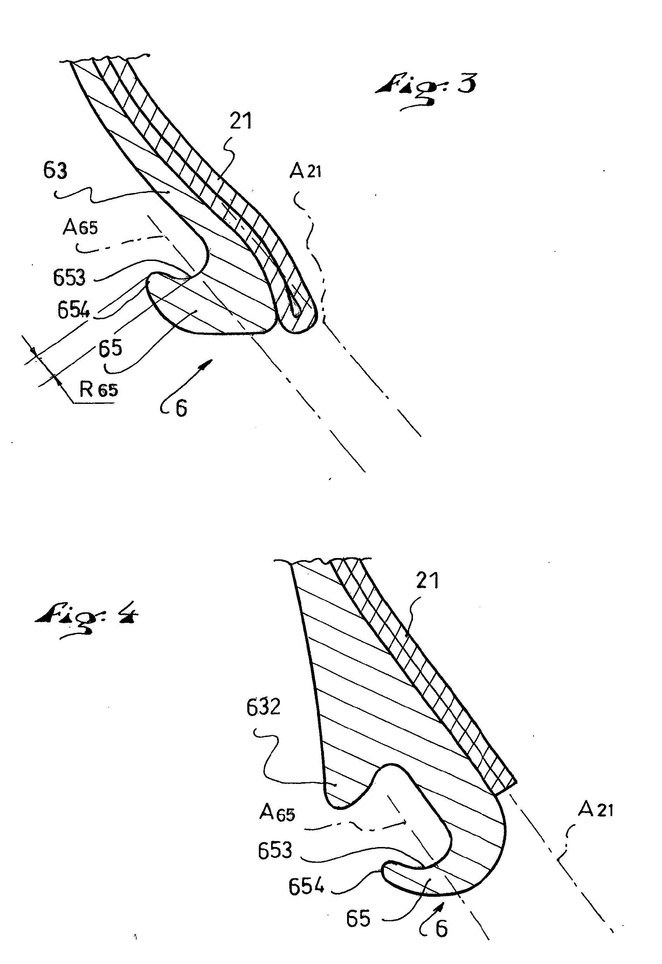

Comme on peut le voir aux figures 2 et 3, le pneumatique 2 a la forme d'un tore ouvert. Il comprend une enveloppe souple 21 et deux talons 6. L'enveloppe 21, est surmontée par une bande de roulement 22. Dans le mode de réalisation décrit ici, l'enveloppe 21, la bande de roulement 22 et les talons sont des pièces différentes cousues et/ou collées les unes aux autres. Il est également possible de réaliser ces éléments en une seule pièce.

Les talons comprennent un épaulement qui fait saillie vers l'extérieur et vers le haut du pneumatique. En revanche ils ne comprennent aucune portion faisant saillie vers l'intérieur et vers le bas.

Les talons sont constitués d'une pièce thermoplastique. Ils se composent d'une chape 63 collée sur le bord latéral de l'enveloppe souple et d'un épaulement 65. L'épaulement fait saillie depuis le bord latéral de l'enveloppe vers l'extérieur du pneumatique. L'extrémité distale de l'épaulement 65 constitue un rebord 654. Entre le rebord 654 et l'enveloppe, se trouve une première surface d'appui 653. Selon une coupe radiale, cette surface d'appui est un arc de cercle dont la bissectrice est sensiblement parallèle à l'enveloppe 21 au niveau du bord latéral de celle-ci.

La première surface d'appui est en retrait par rapport à l'épaulement. La valeur r₆₅, mesure la profondeur du retrait de la première surface d'appui 653. De préférence la valeur r65 est supérieure à 0,2 mm, de préférence supérieure à 0,3 mm.

Les profils transversaux du talon 6, d'une part, et du crochet 35, d'autre part, sont complémentaires de façon à ce que lorsque le pneumatique est monté sur la jante, la première surface d'appui 653 vient contre la première surface de butée 353.

Le talon doit présenter une résistance à la traction telle qu'il ne se déchire pas sous l'effet de la pression de gonflage. Le talon et, notamment, l'épaulement 65 est soumis à de très fortes contraintes de cisaillement. Dans l'exemple décrit ici, les contraintes de cisaillement dans l'épaulement 65 atteignent 7,5 MPa. Il faut en outre rappeler que pour des raisons de commodité, les pneumatiques pour cycles sont maintenant entreposés et commercialisés pliés et qu'il est nécessaire qu'ils puissent être dépliés sans dommage avant l'utilisation. Pour que le retour à la forme d'utilisation se fasse sans problème après pliage, le talon doit présenter un allongement au seuil et une résistance à la traction suffisante. Pour toutes ces raisons, on doit concevoir un talon dont la résistance à la traction est d'au moins 15 Mpa.

Comme on le verra plus loin, le montage et le démontage des pneus nécessitent une extension radiale du pneumatique et de fait une certaine souplesse radiale du talon. Le module longitudinal du talon sera par conséquent inférieur à 2000 MPa, donnant ainsi une raideur du pneumatique de préférence inférieure à 5 daN/mm (La raideur est aussi proportionnelle à la section du talon) pour que le montage du pneu soit aisé.

Dans le premier mode de réalisation, le talon est intégralement constitué par une pièce monobloc et cette dernière est faite d'un seul matériau. Les valeurs d'encadrement des modules mentionnées ci-dessus s'appliquent directement à ce matériau. Bien entendu, l'invention ne se limite pas à une telle réalisation. En effet, on pourra envisager la construction du talon avec deux ou plusieurs matériaux. Par exemple, le talon peut comprendre une âme ayant les propriétés qui sont mentionnées précédemment pour le talon complet, une ou plusieurs couches la recouvrant complètement ou partiellement. Par exemple, cette âme peut être recouverte d'un tissu, d'une fine couche d'élastomère ou de caoutchouc. Cette âme n'est pas équivalente à une tringle, souple ou rigide, telles que celles qui sont actuellement utilisées pour la fabrication des pneus, et notamment des pneus de vélo. En effet, son module longitudinal doit être tel qu'il permet de monter le pneumatique par extension de son diamètre sur une jante conforme à l'invention, c'est-à-dire une jante peu profonde. En revanche son module transversal doit être tel que le talon ne se déformera pas exagérément et résistera aux contraintes de flexion et de cisaillement auxquelles il est soumis. Dans les cas où le talon est une structure composite ayant plusieurs constituants, les modules mentionnés plus haut correspondent aux modules équivalents des structures composites. Les modules équivalents résultent d'un calcul prenant en compte tous les composants du talon, leurs géométries et caractéristiques intrinsèques et donnant une déformation équivalente avec un matériau équivalent homogène.

Un matériau adapté à la fabrication du talon selon l'invention est un matériau de module compris entre 50 et 2000 MPa soit au moins 50 fois plus rigide qu'un caoutchouc naturel et au plus 100 fois moins rigide que l'acier qui sont tous deux des matériaux de référence utilisés dans la fabrication des pneumatiques. Il présente en outre une résistance à la traction supérieure à 15 MPa. Le gonflage du pneumatique induit des contraintes de cohésion notamment au cisaillement dans l'interface entre la chape du talon et la carcasse du pneumatique, ces contraintes de cisaillement augmentent avec la pression de gonflage et la pression du pneumatique et diminuent avec la longueur de l'interface de liaison mesurée dans une section radiale, il est donc préférable que la chape s'insère en sandwich entre 2 plis de carcasse afin d'augmenter l'interface de collage. (Solution non représentée).

La longueur (i) de la chape définissant l'interface est supérieure à 4 mm et de préférence supérieure à 6 mm sa longueur est de préférence limitée à 13 mm pour eviter de trop rigidifier les flans du pneumatiques.

On obtient de bons résultats avec des matériaux dont le module est compris entre 100 et 2000 MPa. De préférence, ce matériau présente une dureté shore D supérieure à 40 (module de 100 MPa env). Les pneumatiques pour cycles sont actuellement réalisés avec des caoutchoucs de dureté 60 à 70 Shore A, ce qui correspond sensiblement à un module d'élasticité d'environ 1,5 à 3 MPa.

Le talon 65 est relativement volumineux, par exemple, dans ce mode de réalisation, la section de l'âme fait environ 6 mm². Par conséquent, pour ne pas alourdir le pneumatique on choisira de préférence un matériau dont la masse volumique est inférieure à 2 g/cm³.

En tout état de cause, afin d'alléger le pneu, la section du talon doit être minimisée. Ainsi, il est préférable de limiter la section du talon à moins de 16 mm² et de préférence à moins de 10 mm². Par exemple,pour une roue de périmètre d'environ 1950 mm, une paire de talons ayant chacun une section de 10 mm² réalisés avec un matériau ayant une masse volumique de 1g/cm3 pèse environ 39 g à la paire ce qui n'est pas négligeable dans la masse totale du pneumatique

A titre d'exemple le talon thermoplastique peut être réalisé en extrusion bi-matière en utilisant du PEBAX 7033 (ARKEMA) pour la zone basse du talon au voisinage de la zone d'appui 65 et du PEBAX 4033 pour la zone supérieure de la chape 63. Le Pebax 7033 a un module d'Young d'environ 380 MPa (50<380<2000), une dureté de 69 Shore D (69>40) et une résistance rupture de 52 MPa alors que le PEBAX 4033 a un module d'environ 80 MPa (50<80<2000) et une dureté de 46 Shore D (46>40) et une résistance rupture de 37 MPa, alors que leur masse volumique est de 1,02 g/cm³.

Si le talon est collé avec la carcasse du pneumatique, il est souhaitable d'incorporer des compatibilisants chimiques adaptés pour assurer une bonne adhésion à l'assemblage ou de coextruder une fine couche d'élastomère autour du talon, ces différentes techniques sont décrites dans le brevet FR 2 729 397.

Dans une variante du premier mode de réalisatio, le talon est constitué d'un assemblage de deux matériaux disctincts. L'épaulement est alors réalisé dans un premier matériau et la chape dans un deuxième matériau. Les deux matériaux en question peuvent être 2 phases d'élastomère et/ou de thermoplastique liées par un compatibilisant bi-phasique comme décrit dans le brevet FR 2 749. Lorsque le talon est réalisé en bi-matière, le matériau choisi pour l'épaulement est de préférence plus raide que celui choisi pour la chape.

D'autres matériaux conviennent aussi pour la fabrication du talon sont par exemple Hytrel (Dupont de Nemours), Elastolan (BASF Elastomère de polyuréthane), PEHD (Polyéthilène Haute densité), Rilsan (ARKEMA Polyamide 11), Grilamid (EMS Polyamide 12) ou des tissus synthétiques enduits de caoutchouc et vulcanisés. Cette liste n'est pas exhaustive et d'autres matériaux non cités conviennent également.

Le talon peut être entièrement réalisé dans un seul matériau et ce matériau doit présenter un certain module d'élasticité transversal, c'est-à-dire selon un plan radial. C'est particulièrement important dans la mesure où l'épaulement 65 va être, à l'usage, soumis à de la flexion, tandis que la chape 63 est soumise à de très forte contrainte de cisaillement. Dans l'exemple décrit ici, les contraintes de cisaillement dans la chape 63 atteignent environ 7,5 MPa à une pression de 10 bars. En revanche, le matériau constituant l'âme du talon aura un module longitudinal, qui est largement inférieur à celui de l'acier ou des fibres (par exemple kevlar) qui sont habituellement utilisés pour réaliser les tringles des pneumatiques.

Le pneumatique selon le premier mode de réalisation de l'invention est de préférence monté avec une chambre à air 90. Avantageusement, par la pression que cette dernière exerce sur le talon, elle assure le maintien du talon en place.

La figure 4 montre en vue en coupe un pneumatique selon un deuxième mode de réalisation de l'invention. De manière similaire à ce qui a été décrit pour le premier mode de réalisation de l'invention, ce pneumatique comporte des talons collés sur les bords latéraux d'une enveloppe souple 21. Le talon 6 comporte un épaulement 65 qui fait saillie vers l'extérieur et à l'extrémité distale duquel se trouve un rebord 654. Une première surface d'appui 653 ayant un profil transversal en arc de cercle est placé en retrait par rapport au rebord 654. La normale à la première surface d'appui 653 est sensiblement tangente à l'enveloppe au niveau de son bord latéral, parallèle à l'axe A₂₁ qui correspond à la direction. Rapportée dans un plan radial, la direction normale (A₆₅) à la première surface d'appui 653 est la bissectrice du profil en arc de cercle. Cette direction normale (A₆₅) est sensiblement parallèle à l'axe (A₂₁) correspondant à la tangente à l'enveloppe à proximité de son bord latéral.

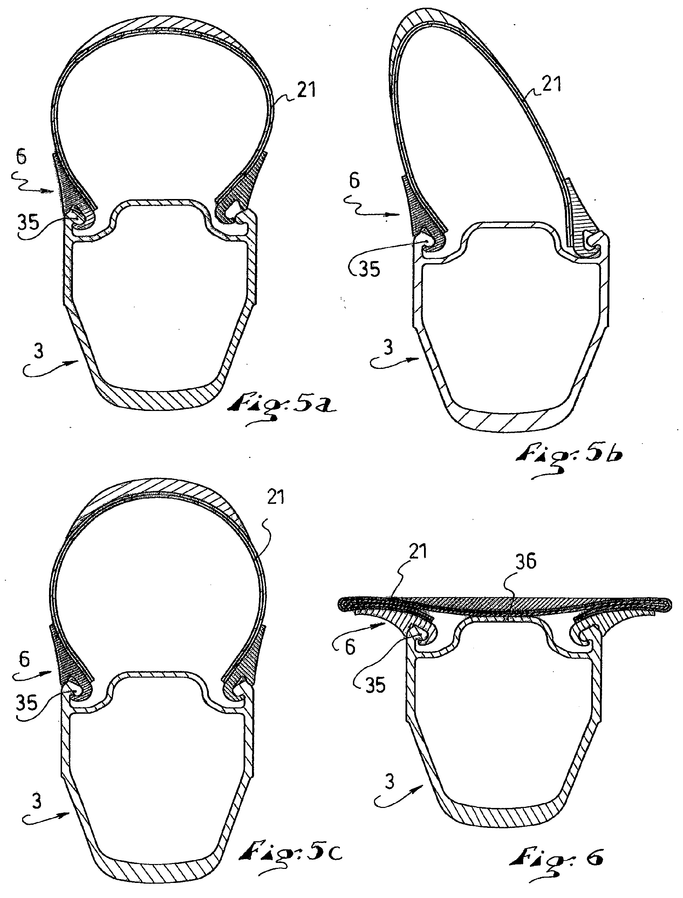

Le talon comprend en outre une lèvre 632 qui est placée au dessus de l'épaulement 65 et qui comme lui fait saillie vers l'extérieur. Cette lèvre 632 forme avec l'épaulement 65 une cavité ouverte qui lorsque le pneumatique (cf. figs. 5a-5c) est en place vient coiffer le crochet 35 de la jante. A l'état libre, c'est-à-dire avant montage du pneu sur la jante, le volume de la cavité est légèrement plus petit que le crochet 35, si bien que le talon vient se cliper sur le crochet.

Dans le deuxième mode de réalisation comme dans le premier, le talon ne comprend aucune portion faisant saillie vers l'intérieur et vers le bas.

Les figures 5a-5c montrent comment se monte le pneumatique selon le second mode de réalisation de l'invention sur la jante. Cette série de vues illustrent l'assemblage du talon droit 6 dans la gouttière droite, alors que le talon gauche est déjà en place.

La cavité ouverte formée par l'épaulement 65 et la lèvre 632 doit légèrement s'élargir pour prendre sa place sur le crochet 35. Cet élargissement est réalisé par une déformation par flexion de l'épaulement 65. Comme dans le mode de réalisation précédent, le module de flexion du talon est tel qu'il est possible d'agrandir suffisamment le diamètre du pneumatique pour le faire passer au-dessus du crochet 35.

La figure 6 illustre la configuration de la roue en cas de crevaison. On peut voir que la portion centrale du pneumatique prend alors appui sur le pavé central 36 de la jante tandis que les talons restent bien en place sur les crochets grâce à leur clippage.

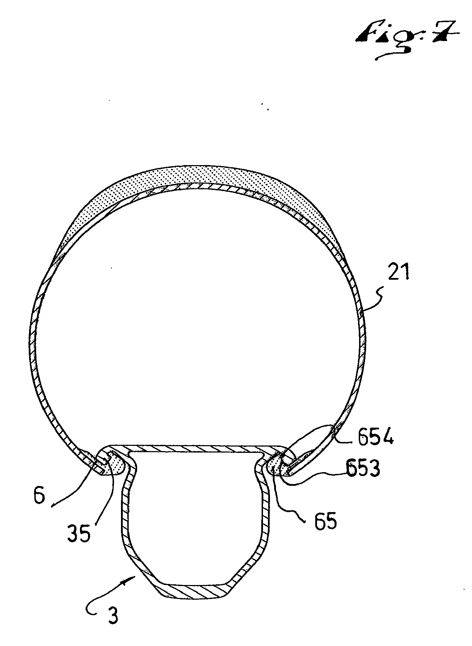

La figure 7 illustre en section une roue équipée d'un pneumatique selon un troisième mode de réalisation de l'invention. De manière similaire à ce qui a été décrit pour les premier et deuxième modes de réalisation de l'invention, ce pneumatique comporte des talons collés sur les bords latéraux d'une enveloppe souple 21. Le talon 6 comporte un épaulement 65, qui comporte une première surface d'appui 653 et à l'extrémité distale duquel se trouve un rebord 654. La surface d'appui 653 se trouve en retrait par rapport au rebord 654 de façon à définir un profil complémentaire du crochet 35 ménagé sur la jante 3. L'épaulement 65 fait saillie vers l'intérieur de l'enveloppe 21 du pneumatique. En revanche, le talon ne comprend aucune portion faisant saillie vers l'extérieur et vers le bas du pneumatique.

Les pneumatiques des quelques modes de réalisation décrits ici à titres d'exemples correspondent typiquement à une utilisation sur route. Bien entendu, l'invention s'applique également aux pneus prévus pour la pratique du VTT, qui même si elles sont souvent utilisées avec des pressions de gonflage plus basses, ont des pneumatiques de largeur plus importante (jusqu'à 60 mm). Par conséquent, les tensions linéiques de l'enveloppe d'un pneumatique pour VTT sont sensiblement du même ordre que celles d'un pneu de route. La conception des talons telle qu'elle est ici décrite est donc parfaitement transposable.

## Revendications

1. Pneumatique (2) pour cycle comportant une enveloppe (21) qui a deux bords latéraux et qui définit un volume intérieur ayant sensiblement la forme d'un tore ouvert, dont l'ouverture est délimitée par les deux bords latéraux, ledit pneumatique comportant également un talon placé à proximité de chaque bord latéral, l'un au moins des deux talons (6) présentant un épaulement (65) faisant saillie depuis la portion de l'enveloppe qui lui est adjacente,
**caractérisé en ce que**,
- ledit épaulement (65) comporte à sa surface extérieure une première surface d'appui (653) et un rebord (654), ladite première surface d'appui étant placée entre ledit rebord et ladite enveloppe et ladite surface d'appui étant placée en retrait par rapport audit rebord,
- et **en ce que** le module du talon ou le module équivalent des différents composants qui constituent ledit talon est compris entre 50 MPa et 2000 MPa.

2. Pneumatique selon la revendication précédente, **caractérisé en ce que**, dans un plan radial, la direction (A₆₅) normale à la première surface d'appui (653) est sensiblement tangente à l'enveloppe (21).

3. Pneumatique selon l'une des revendications précédentes, **caractérisé en ce que** dans un plan radial, la première surface d'appui a un profil en arc de cercle.

4. Pneumatique selon l'une des revendications 1 à 2, **caractérisé en ce que** dans un plan radial, la première surface d'appui a un profil droit.

5. Pneumatique selon l'une des revendications précédentes, **caractérisé en ce que** ledit épaulement fait saillie vers l'extérieur par rapport au volume intérieur.

6. Pneumatique selon la revendication précédente, **caractérisé en ce que** le talon ne comprend aucune portion faisant saillie vers l'intérieur et vers le bas.

7. Pneumatique selon l'une des revendications 1 à 4, **caractérisé en ce que** ledit épaulement fait saillie vers l'intérieur par rapport au volume intérieur.

8. Pneumatique (2) selon l'une des revendications précédentes, **caractérisé en ce que** la profondeur du retrait de la première surface d'appui par rapport au rebord 654 de l'épaulement supérieure à 0,2mm

9. Pneumatique selon l'une des revendication 1 à 5, **caractérisé en ce que** le talon est une pièce indépendante de l'enveloppe qui est solidarisée à cette dernière par couture, collage ou soudure.

10. Pneumatique selon la revendication précédente, **caractérisé en ce que** le talon comporte une chape servant à le fixer sur l'enveloppe et **en ce que** ladite chape présente dans un plan radial, une hauteur comprise entre 4 et 15 mm, de préférence comprise entre 6 et 13 mm.

11. Pneu selon l'une des revendications précédentes, **caractérisé en ce que** la section du talon est inférieure à 16 mm²

12. Pneu selon l'une des revendications précédentes, **caractérisé en ce que** le talon est réalisé en utilisant deux matériau distincts.

13. Roue comportant un pneu selon l'une des revendications 1 à 12.
